# EUROPEAN PATENT SPECIFICATION

(11) **EP 3 329 391 B1**
(45) Date of publication and mention of the grant of the patent: **06.01.2021**
(21) Application number: 15899946.6
(22) Date of filing: 31.07.2015
(51) Int. Cl.: H04N 19/107, G06F 16/28, H04N 19/172, H04N 19/136, H04N 19/142, H04N 19/85, H04N 19/114

(54) **TRANSLATE DATA STRUCTURE TO VIDEO FRAME STRUCTURE**
ÜBERSETZUNG EINER DATENSTRUKTUR ZU EINER VIDEOEINZELBILDSTRUKTUR
CONVERSION D'UNE STRUCTURE DE DONNÉES EN STRUCTURE DE TRAME VIDÉO

(43) Date of publication of application: 06.06.2018
(73) Proprietor: EntIT Software LLC, Sunnyvale, California 94089 (US)
(72) Inventor: LI, Jia-Yang, Shanghai 201203 (CN); YIN, Tong-Ning, Shanghai 201203 (CN)
(74) Representative: Prock, Thomas
(86) International application number: PCT/CN2015/085722
(87) International publication number: WO 2017/020167

(56) References cited:
- WO-A1-2015/038877
- CN-A- 103 200 403
- CN-A- 103 442 237
- CN-A- 104 541 272
- JP-A- 2014 090 326
- US-A1- 2009 006 955
- US-A1- 2015 142 837
- "Test Model 1 of Video Coding for Browsers", 105. MPEG MEETING;29-7-2013 - 2-8-2013; VIENNA; (MOTION PICTURE EXPERT GROUP OR ISO/IEC JTC1/SC29/WG11),, no. N13777, 31 August 2013 (2013-08-31), XP030020525,

## Description

### BACKGROUND

In the data warehouse context, a dimension is a structure that categorizes facts and measures in order to enable users to answer business questions. Commonly used dimensions may include people, products, places, time, and the like. Dimensions provide structured labeling information to otherwise unordered numeric measures.

In "Test Model 1 of Video Coding for Browsers", 105th MPEG meeting; Vienna; Document no. N13777, 31 August 2013, there is presented a technical overview of the Video Coding for Browsers (VCB) test model (i.e. the encoder).

US2015142837 describes methods and systems for representing data. An example method can comprise providing a first representation of data and receiving a request to change resolution of the data. An example method can comprise, transforming, based on at least one wavelet function, the data to at least one of reduced data or expanded data. An example method can comprise providing a second representation of the data based on at least one of the reduced data or expanded data.

US2009006955 describes an apparatus, method, system and computer program product for selectively and interactively downloading a media item, such as a video. Prior to downloading the media item, the user may first download an approximation of each group of pictures (GOPs) of the video. The user can then browse through the approximations to determine which of the GOPs to download. Each approximation may include at least part of the intra frame ("I-frame") of the corresponding GOP. In particular, the approximation may include, only the low-frequency, component of the I-frame or the I-frame itself. Once downloaded, the approximations may be displayed, and the user may select one or more of the approximations to selectively download the corresponding GOPs. The selected GOPs may thereafter be downloaded in accordance with a selected level of specificity or detail.

### BRIEF DESCRIPTION OF THE DRAWINGS

Some examples of the present application are described with respect to the following figures:
FIG. 1 is a block diagram of an example system for translating a data structure to a video frame structure;
FIG. 2 is a block diagram of an example computing device for translating a data structure to a video frame structure; and
FIG. 3 is a flowchart of an example method for translating a data structure to a video frame structure.

### DETAILED DESCRIPTION

As described above, a dimension is a structure that categorizes facts and measures in order to enable users to answer business questions. A dimension may be provided within a data structure, which may be any suitable structure providing data. For example, a two-dimensional data structure may be a table showing sales data for various store locations on a particular day. A two-dimensional data structure may be used to create charts, histograms, figures, and the like, each of which may illustrate the data in various manners. However, these illustrations only show a particular data set at one given time without visibility into the changes to the data set over time. For example, a two-dimensional data structure associated with sales data for various stores may show the sales data for a given day, and subsequent sales data may be received for subsequent days. However, each data set for a given day may not provide insight into the changes in sales data between days.

Examples discussed herein provide techniques for accessing and viewing the differences in historical two-dimensional data in an efficient manner, allowing a user to quickly access data based on changes to the data. For example, data sets associated with a data structure may change over time, and the changes may be quickly accessed based on how much the data has changed. Two-dimensional data associated with a particular data structure may be represented a particular type of compressed frame within a video, and the type of compressed frame may indicate how much the data associated with that frame has changed. Using the example of two-dimensional sales data provided daily, each set of daily sales data may be translated to a video frame of pixels such that the two-dimensional data structure may be converted to a video frame structure. Each frame of pixels may be encoded and/or compressed using any suitable video compression techniques (e.g., the WebM video file format), and the compressed frame may be stored in a frame file with other compressed frames. For example, each two-dimensional data set may be translated to raw pixel data, and the raw pixel data may be encoded as an intra-frame (I-frame) or as a predicted frame (P-frame). An I-frame may be a frame that is coded without reference to any frame except itself. A P-frame may be a frame that is coded based on a reference frame. For example, a P-frame may be a frame that is encoded with respect to its preceding frame.

The frames in the frame file may be accessed to view I-frames and/or P-frames that may indicate the changes between the data sets. For example, for changes to a data set that exceed a specified threshold, the data set may be encoded as an I-frame that may indicate a large change to the data set. I-frames may be retrieved when a user requests to view large changes to data. For changes to a data set that does not exceed a specified threshold, the data set may be encoded as a P-frame that may indicate a small change to the data set. P-frames may be retrieved when a user requests to view small changes to data.

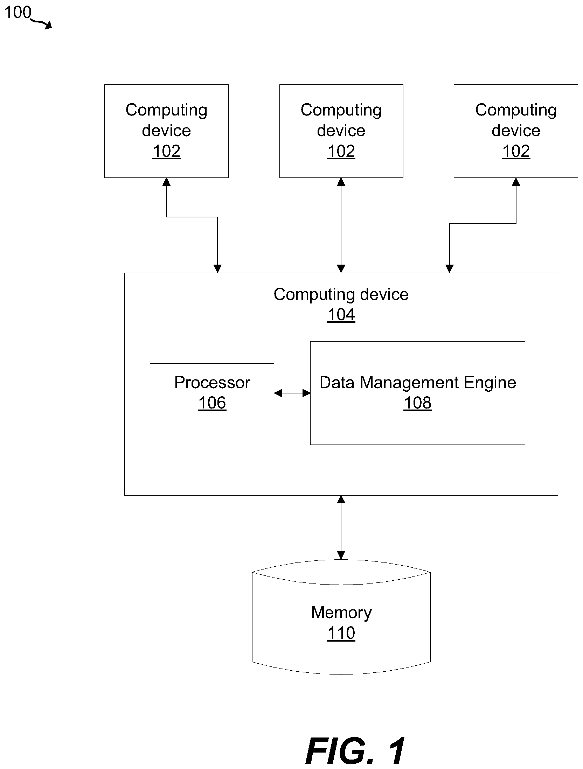

Referring now to the figures, FIG. 1 is a block diagram of an example system 100 for translating a data structure to a video frame structure. System 100 may include computing device 104, which may be any suitable computing device in communication with any number of computing devices 102. Computing device 104 may include a processor 106 and a data management engine 108 that may be any suitable engine that may cause the processor 106 to translate data structures received from computing devices 102 into video frame structures.

For example, computing devices 102 may each be associated with a retail store at a particular location, and each computing device 102 may send their daily sales data to computing device 104. The daily sales data may be in the form of a two-dimensional data structure (e.g., a two-dimensional table having daily sales data for various retail stores). Computing device 104 may translate the data in the two-dimensional data structure into raw pixel data, and the raw pixel data may be encoded as either an I-frame or a P-frame. For example, a data set may be encoded as a P-frame such that the P-frame represents the differences between that current data set and a data set preceding that current data set. In some examples, the first set of data associated a data structure may be encoded as an I-frame, as there is no preceding data set that can be used to create a P-frame. In some examples, if a difference between a current data set and its preceding data set exceeds a particular threshold, an I-frame may be created instead of a P-frame. In some examples, if an I-frame is created, a notification relating to the I-frame may be provided (e.g., to a user).

For example, the data management engine 108 of computing device 104 may cause processor 106 to receive analytic values of a data structure (e.g., a two-dimensional table of data). Analytic values of a data structure may be any suitable non-image values representing facts, measures, quantities, and the like, for analysis to answer analytic queries, and may be provided in a non-image data structure. For example, the analytic values may be sales data provided in a two-dimensional table of daily sales data for various retail stores. The analytic values may be translated into raw pixel data such that each analytic value of the data structure is represented as a pixel in a video frame structure of pixels. Raw pixel data for a given pixel is data associated with a color of the pixel, and the analytic values may be translated to raw pixel data representing a color corresponding to the analytic value. For example, for two-dimensional data, one dimension may be mapped to a raw video frame's row of pixels and the other dimension may be mapped to the raw video frame's column of pixels. As an example, the analytic values may be the 4-cell by 4-cell sales values shown in Table 1 below:

**Table 1. Sales Data**

| | Device 1 | Device 2 | Device 3 | Device 4 |
|---|---|---|---|---|
| Region 1 | 0.15 | 0.27 | 1.03 | 2.10 |
| Region 2 | 1.04 | 2.00 | 0.89 | 1.80 |
| Region 3 | 0.56 | 1.34 | 1.45 | 1.00 |
| Region 4 | 1.23 | 2.45 | 0.97 | 0.04 |

The analytic values of the data structure shown in Table 1 above may be translated to a 4-pixel by 4-pixel image by translating each analytic value in each of the cells to corresponding raw pixel data for each corresponding pixel. Raw pixel data for a grayscale image may be represented as a number within the range 0 to 255, where each number in the range represents a degree of luminance of the corresponding pixel (e.g., 0 = black, 255 = white). For Table 1, the analytic values may be translated to raw pixel data by multiplying the values in each cell by 100. An example of the raw pixel data for Table 1 is shown in Table 2 below:

**Table 2. Raw Pixel Data**

| | Device 1 | Device 2 | Device 3 | Device 4 |
|---|---|---|---|---|
| Region 1 | 15 | 27 | 103 | 210 |
| Region 2 | 104 | 200 | 89 | 180 |
| Region 3 | 56 | 134 | 145 | 100 |
| Region 4 | 123 | 245 | 97 | 4 |

The data in Table 2 may be the grayscale raw pixel data that corresponds to the data in Table 1. The grayscale raw pixel data in Table 1 may be formatted to the video frame structure by converting Table 1 into raw pixel data (e.g., data associated with pixels in a video frame of a video).

Once the analytic values are translated into raw pixel data, the data management engine 108 of computing device 104 may cause processor 106 to encode the raw pixel data into an I-frame in response to a determination that a difference between the raw pixel data and previous raw pixel data associated with previous analytic values exceeds a specified threshold. The data management engine 108 of computing device 104 may also cause processor 106 to encode the raw pixel data into a P-frame in response to a determination that the difference does not exceed the specified threshold. The specified threshold may be any suitable threshold representing a degree of change between the current analytic values and preceding analytic values, and the specified threshold may be used to determine whether raw pixel data is to be encoded as an I-frame or a P-frame. The threshold may be defined in any suitable manner (e.g., a user-defined threshold). For example, the threshold may define whether the difference between frames is great enough to warrant encoding the frame as an I-frame instead of a P-frame. Raw pixel data may be encoded to compressed frames (e.g., I-frames, P-frames, etc.) in any suitable manner. In some examples, the raw pixel data may be encoded based on the WebM standard, which is a video compression standard.

As subsequent data sets are received, the data sets may be encoded as I-frames and/or P-frames as described above. For example, subsequent analytic values of the data structure may be received, and the subsequent analytic values may be translated into subsequent raw pixel data. The data management engine 108 of computing device 104 may cause processor 106 to encode the subsequent raw pixel data into an I-frame in response to a determination that a subsequent difference between the subsequent raw pixel data and the raw pixel data exceeds the specified threshold and encode the subsequent raw pixel data into a P-frame in response to a determination that the subsequent difference does not exceed the specified threshold. In some examples, if the second difference exceeds the specified threshold beyond a particular amount, a notification and/or an alarm may be provided. In some examples, data that would otherwise be encoded as a P-frame may be encoded as an I-frame by force (e.g., by a user).

I-frames and P-frames associated with a particular data structure may be stored in a common frame file associated with the data structure. The frame file may be stored in memory 110, which may be any suitable type of memory device. The frame file may be accessed when a user wishes to view the various changes to data in the data structure. For example, computing device 104 may receive a request to view small changes to the data structure (e.g., the small changes being based on not exceeding the specified threshold), and data associated with P-frames in the frame file may be provided. In another example, computing device 104 may receive a request to view large changes (e.g., the large changes being based on exceeding the specified threshold) to the data structure, and data associated with I-frames in the frame file may be provided.

The data management engine 108 of computing device 104 may cause processor 106 to provide first data associated with at least one I-frame in response to a request to view data changes exceeding the specified threshold. For example, the first data provided may include a particular set of analytic values associated with the at least one I-frame. The data management engine 108 of computing device 104 may also cause processor 106 to provide second data associated with at least one P-frame in response to a request to view data changes not exceeding the specified threshold. For example, the second data provided may include a particular set of analytic values associated with at least one P-frame. The first data and the second data may be provided from the frame file that includes the I-frames and P-frames associated with the data structure.

Computing device 104 and computing devices 102 may be in communication with each other directly or over a network, which may be any suitable network, such as an ad hoc network, an intranet, an extranet, a virtual private network (VPN), a local area network (LAN), a wireless LAN (WLAN), a wide area network (WAN), a wireless WAN (WWAN), a metropolitan area network (MAN), a portion of the Internet, a portion of the Public Switched Telephone Network (PSTN), a cellular telephone network, or any other type of network, or a combination of two or more such networks. Each computing device 102 may be any suitable computing device having components that allow the computing device 102 to communicate data to computing device 104. For example, a computing device 102 may be a device at a retail store capable of communicating sales data to computing device 104.

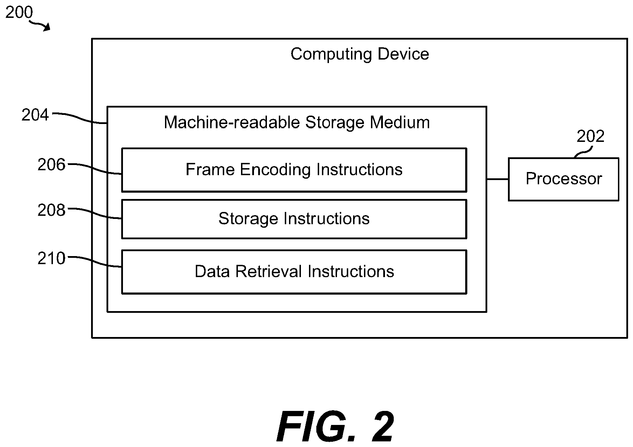

FIG. 2 is a block diagram of an example computing device 200 for translating a data structure to a video frame structure. Computing device 200 may be any suitable computing device (e.g., computing device 104 of FIG. 1) that may translate a data structure to a video frame structure.

Computing device 200 may be, for example, a web-based server, a local area network server, a cloud-based server, a notebook computer, a desktop computer, an all-in-one system, a tablet computing device, a mobile phone, an electronic book reader, a printing device, or any other electronic device suitable for translating a data structure to a video frame structure. Computing device 200 may include a processor 202 and a machine-readable storage medium 204. Computing device 200 may be in communication with other computing devices providing data relating to a data structure.

Processor 202 is a tangible hardware component that may be a central processing unit (CPU), a semiconductor-based microprocessor, and/or other hardware devices suitable for retrieval and execution of instructions stored in machine-readable storage medium 204. Processor 202 may fetch, decode, and execute instructions 206, 208, and 210 to control a process of translating a data structure to a video frame structure. As an alternative or in addition to retrieving and executing instructions, processor 202 may include at least one electronic circuit that includes electronic components for performing the functionality of instructions 206, 208, 210, or a combination thereof.

Machine-readable storage medium 204 may be any electronic, magnetic, optical, or other physical storage device that contains or stores executable instructions. Thus, machine-readable storage medium 204 may be, for example, Random Access Memory (RAM), an EPROM, an Electrically Erasable Programmable Read-Only Memory (EEPROM), a storage device, an optical disc, and the like. In some examples, machine-readable storage medium 204 may be a non-transitory storage medium, where the term "non-transitory" does not encompass transitory propagating signals. As described in detail below, machine-readable storage medium 204 may be encoded with a series of processor executable instructions 206, 208, and 210 for translating analytic values of a data structure into raw pixel data such that each analytic value of the data structure is represented as a pixel in a video frame structure of pixels, compressing the raw pixel data into an I-frame in response to a determination that a difference between the raw pixel data and previous raw pixel data associated with previous analytic values exceeds a specified threshold, compressing the raw pixel data into a P-frame in response to a determination that the difference does not exceed the specified threshold, storing the I-frame or the P-frame in a frame file associated with the data structure, providing first data associated with at least one I-frame in response to a request to view data changes exceeding the specified threshold, and providing second data associated with at least one P-frame in response to a request to view data changes not exceeding the specified threshold.

Frame encoding instructions 206 may manage and control the translation of analytic values into raw pixel data and the compression of raw pixel data into either an I-frame or a P-frame. For example, analytic values of a data structure may be translated into raw pixel data such that each analytic value of the data structure is represented as a pixel in a video frame structure of pixels. The frame encoding instructions 206 may compress the raw pixel data into an I-frame in response to a determination that a difference between the raw pixel data and previous raw pixel data associated with previous analytic values exceeds a specified threshold. The frame encoding instructions 206 may also compress the raw pixel data into a P-frame in response to a determination that the difference does not exceed the specified threshold.

Storage instructions 208 may manage and control the storing of any encoded I-frames and/or P-frames in a frame file associated with the data structure. For example, once an I-frame and/or a P-frame is compressed, it is stored in the frame file associated with the corresponding data structure.

Data retrieval instructions 210 may manage and control the providing of first data from the frame file, where the first data is associated with at least one I-frame and provided in response to a request to view data changes exceeding the specified threshold. Data retrieval instructions 210 may also manage and control the providing of second data from the frame file, where the second data is associated with at least one P-frame and provided in response to a request to view data changes not exceeding the specified threshold.

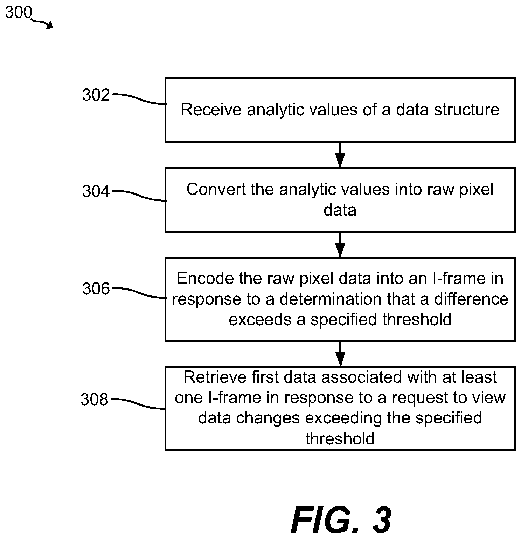

FIG. 3 is a flowchart of an example method 300 for translating a data structure to a video frame structure. Method 300 may be implemented using computing device 200 of FIG. 2.

Method 300 includes, at 302, receiving analytic values of a data structure. The analytic values may be any suitable values relating to the data structure (e.g., sales data for a particular day).

Method 300 also includes, at 304, convert the analytic values into raw pixel data such that each analytic value of the data structure is represented as a pixel in a video frame structure of pixels. For example, the analytic values may be converted into raw pixel data that may be grayscale pixel data.

Method 300 also includes, at 306, encoding the raw pixel data into an I-frame in response to a determination that a difference between the raw pixel data and previous raw pixel data associated with previous analytic values exceeds a specified threshold. The raw pixel data may be encoded into the I-frame using any suitable video compression techniques (e.g., WebM).

Method 300 also includes, at 308, retrieving first data associated with at least one I-frame in response to a request to view data changes exceeding the specified threshold.

Examples provided herein (e.g., methods) may be implemented in hardware, software, or a combination of both. Example systems may include a controller/processor and memory resources for executing instructions stored in a tangible non-transitory medium (e.g., volatile memory, non-volatile memory, and/or machine-readable media). Non-transitory machine-readable media can be tangible and have machine-readable instructions stored thereon that are executable by a processor to implement examples according to the present disclosure.

An example system can include and/or receive a tangible non-transitory machine-readable medium storing a set of machine-readable instructions (e.g., software). As used herein, the controller/processor can include one or a plurality of processors such as in a parallel processing system. The memory can include memory addressable by the processor for execution of machine-readable instructions. The machine-readable medium can include volatile and/or non-volatile memory such as a random access memory ("RAM"), magnetic memory such as a hard disk, floppy disk, and/or tape memory, a solid state drive ("SSD"), flash memory, phase change memory, and the like.

## Claims

1. A computing device (200), comprising:
a processor (202) to:
translate analytic values of a data structure into raw pixel data such that each analytic value of the data structure is represented as a pixel in a video frame structure of pixels, wherein the analytic values are non-image values, and wherein the data structure is a non-image data structure;
in response to a determination that a difference between the raw pixel data of a video frame and raw pixel data of a previous video frame associated with previous analytic values exceeds a specified threshold, encode the raw pixel data into an I-frame;
in response to a determination that the difference does not exceed the specified threshold, encode the raw pixel data into a P-frame;
provide first data associated with at least one I-frame in response to a request to view data changes exceeding the specified threshold; and
provide second data associated with at least one P-frame in response to a request to view data changes not exceeding the specified threshold.

2. The computing device (200) of claim 1, wherein the processor (202) is further to store the I-frame or the P-frame in a frame file associated with the data structure, wherein the first data and the second data are provided from the frame file.

3. The computing device (200) of claim 1, wherein the data structure is a two-dimensional table.

4. The computing device (200) of claim 1, wherein the raw pixel data is encoded into the I-frame and wherein the processor (202) is further to:
determine an amount by which the difference exceeds the specified threshold; and
provide a notification if the amount exceeds a specified limit.

5. The computing device (200) of claim 1, wherein the first data provided includes a particular set of analytic values associated with the at least one I frame.

6. The computing device (200) of claim 1, wherein the second data provided includes a particular set of analytic values associated with the at least one P-frame.

7. The computing device (200) of claim 1, wherein the processor (202) is further to:
receive subsequent analytic values of the data structure;
translate the subsequent analytic values of the data structure into subsequent raw pixel data;
encode the subsequent raw pixel data into an I-frame in response to a determination that a subsequent difference between the subsequent raw pixel data and the raw pixel data exceeds the specified threshold; and
encode the subsequent raw pixel data into a P-frame in response to a determination that the subsequent difference does not exceed the specified threshold.

8. A method, comprising:
receiving (302), by a computing device, analytic values of a data structure, wherein the analytic values are non-image values, and wherein the data structure is a non-image data structure;
converting (304), by the computing device, the analytic values into raw pixel data such that each analytic value of the data structure is represented as a pixel in a video frame structure of pixels;
encoding (306), by the computing device, the raw pixel data into an I-frame in response to a determination that a difference between the raw pixel data of a video frame and raw pixel data of a previous video frame associated with previous analytic values exceeds a specified threshold;
retrieving (308), by the computing device, first data associated with at least one I-frame in response to a request to view data changes exceeding the specified threshold
encoding, by the computing device, the raw pixel data into a P-frame in response to a determination that the difference does not exceed the specified threshold; and
retrieving, by the computing device, second data associated with at least one P-frame in response to a request to view data changes not exceeding the specified threshold.

9. The method of claim 8, further comprising:
storing, by the computing device, the I-frame in a frame file associated with the data structure, wherein the first data is retrieved from the frame file.

10. The method of claim 8, further comprising:
determining, by the computing device, an amount by which the difference exceeds the specified threshold; and
providing, by the computing device, a notification if the amount exceeds a specified limit.

11. A non-transitory machine-readable storage medium (204) storing instructions (206, 208, 210) that, when executed by at least one processor (202) of a computing device (200), cause the computing device (200) to:
translate analytic values of a data structure into raw pixel data such that each analytic value of the data structure is represented as a pixel in a video frame structure of pixels, wherein the analytic values are non-image values, and wherein the data structure is a non-image data structure;
compress the raw pixel data into an I-frame in response to a determination that a difference between the raw pixel data of a video frame and raw pixel data of a previous video frame associated with previous analytic values exceeds a specified threshold;
compress the raw pixel data into a P-frame in response to a determination that the difference does not exceed the specified threshold;
store the I-frame or the P-frame in a frame file associated with the data structure;
provide, from the frame file, first data associated with at least one I-frame in response to a request to view data changes exceeding the specified threshold; and
provide, from the frame file, second data associated with at least one P-frame in response to a request to view data changes not exceeding the specified threshold.

12. The non-transitory machine-readable storage medium of claim 11,
wherein the first data provided includes a particular set of analytic values associated with the at least one I-frame.

13. The non-transitory machine-readable storage medium of claim 11, wherein the second data provided includes a particular set of analytic values associated with the at least one P-frame.

14. The non-transitory machine-readable storage medium of claim 11, wherein the data structure is a two-dimensional table.

## Patentansprüche

1. Berechnungsvorrichtung (200), umfassend:
einen Prozessor (202) zum:
Übersetzen analytischer Werte einer Datenstruktur in rohe Bildpunktdaten derart, dass jeder analytische Wert der Datenstruktur als ein Bildpunkt in einer Videorahmenstruktur von Bildpunkten repräsentiert wird, wobei die analytischen Werte Nicht-Bild-Werte sind und wobei die Datenstruktur eine Nicht-Bild-Datenstruktur ist;
als Reaktion auf eine Bestimmung, dass eine Differenz zwischen den rohen Bildpunktdaten eines Videorahmens und rohen Bildpunktdaten eines vorherigen Videorahmens, die mit vorherigen analytischen Werten assoziiert sind, einen spezifizierten Schwellenwert übersteigt, Codieren der rohen Bildpunktdaten zu einem I-Rahmen;
als Reaktion auf eine Bestimmung, dass die Differenz den spezifizierten Schwellenwert nicht übersteigt, Codieren der rohen Bildpunktdaten zu einem P-Rahmen;
Bereitstellen erster Daten, die mit mindestens einem I-Rahmen assoziiert sind, als Reaktion auf eine Anforderung zum Betrachten von Datenveränderungen, die den spezifizierten Schwellenwert übersteigen; und
Bereitstellen zweiter Daten, die mit mindestens einem P-Rahmen assoziiert sind, als Reaktion auf eine Anforderung zum Betrachten von Datenänderungen, die den spezifizierten Schwellenwert nicht übersteigen.

2. Berechnungsvorrichtung (200) nach Anspruch 1, wobei der Prozessor (202) ferner den I-Rahmen oder den P-Rahmen in einer Rahmendatei, die mit der Datenstruktur assoziiert ist, speichern soll, wobei die ersten Daten und die zweiten Daten aus der Rahmendatei bereitgestellt werden.

3. Berechnungsvorrichtung (200) nach Anspruch 1, wobei die Datenstruktur eine zweidimensionale Tabelle ist.

4. Berechnungsvorrichtung (200) nach Anspruch 1, wobei die rohen Bildpunktdaten in den I-Rahmen codiert werden und wobei der Prozessor (202) ferner Folgendes durchführen soll:
Bestimmen eines Betrags, um den die Differenz den spezifizierten Schwellenwert übersteigt; und
Bereitstellen einer Benachrichtigung, wenn der Betrag eine spezifizierte Grenze übersteigt.

5. Berechnungsvorrichtung (200) nach Anspruch 1, wobei die bereitgestellten ersten Daten eine besondere Menge von analytischen Werten, die mit dem mindestens einen I-Rahmen assoziiert sind, einschließt.

6. Berechnungsvorrichtung (200) nach Anspruch 1, wobei die bereitgestellten zweiten Daten eine besondere Menge von analytischen Werten, die mit dem mindestens einen P-Rahmen assoziiert sind, einschließt.

7. Berechnungsvorrichtung (200) nach Anspruch 1, wobei der Prozessor (202) ferner Folgendes durchführen soll:
Empfangen anschließender analytischer Werte der Datenstruktur;
Übersetzen der anschließenden analytischen Werte der Datenstruktur in anschließende rohe Bildpunktdaten;
Codieren der anschließenden rohen Bildpunktdaten zu einem I-Rahmen als Reaktion auf eine Bestimmung, dass eine anschließende Differenz zwischen den anschließenden rohen Bildpunktdaten und den rohen Bildpunktdaten den spezifizierten Schwellenwert übersteigt; und
Codieren der anschließenden rohen Bildpunktdaten zu einem P-Rahmen als Reaktion auf eine Bestimmung, dass die anschließende Differenz den spezifizierten Schwellenwert nicht übersteigt.

8. Verfahren, umfassend:
Empfangen (302), durch eine Berechnungsvorrichtung, analytischer Werte einer Datenstruktur, wobei die analytischen Werte Nicht-Bild-Werte sind und wobei die Datenstruktur eine Nicht-Bild-Datenstruktur ist;
Umwandeln (304), durch die Berechnungsvorrichtung, der analytischen Werte in rohe Bildpunktdaten derart, dass jeder analytische Wert der Datenstruktur als ein Bildpunkt in einer Videorahmenstruktur von Bildpunkten repräsentiert wird;
Codieren (306), durch die Berechnungsvorrichtung, der rohen Bildpunktdaten zu einem I-Rahmen als Reaktion auf eine Bestimmung, dass eine Differenz zwischen den rohen Bildpunktdaten eines Videorahmens und rohen Bildpunktdaten eines vorherigen Videorahmens, die mit vorherigen analytischen Werten assoziiert sind, einen spezifizierten Schwellenwert übersteigt;
Abrufen (308), durch die Berechnungsvorrichtung, erster Daten, die mit mindestens einem I-Rahmen assoziiert sind, als Reaktion auf eine Anforderung zum Betrachten von Datenänderungen, die den spezifizierten Schwellenwert übersteigen;
Codieren, durch die Berechnungsvorrichtung, der rohen Bildpunktdaten zu einem P-Rahmen als Reaktion auf eine Bestimmung, dass die Differenz den spezifizierten Schwellenwert nicht übersteigt; und
Abrufen, durch die Berechnungsvorrichtung, zweiter Daten, die mit mindestens einem P-Rahmen assoziiert sind, als Reaktion auf eine Anforderung zum Betrachten von Datenänderungen, die den spezifizierten Schwellenwert nicht übersteigen.

9. Verfahren nach Anspruch 8, ferner umfassend:
Speichern, durch die Berechnungsvorrichtung, des I-Rahmens in einer Rahmendatei, die mit der Datenstruktur assoziiert ist, wobei die ersten Daten aus der Rahmendatei abgerufen werden.

10. Verfahren nach Anspruch 8, ferner umfassend:
Bestimmen, durch die Berechnungsvorrichtung, eines Betrags, um den die Differenz den spezifizierten Schwellenwert übersteigt; und
Bereitstellen, durch die Berechnungsvorrichtung, einer Benachrichtigung, wenn der Betrag eine spezifizierte Grenze übersteigt.

11. Nicht vergängliches, maschinenlesbares Speichermedium (204), das Anweisungen (206, 208, 210) speichert, die, wenn sie durch mindestens einen Prozessor (202) einer Berechnungsvorrichtung (200) ausgeführt werden, bewirken, dass die Berechnungsvorrichtung (200) Folgendes durchführt:
Übersetzen analytischer Werte einer Datenstruktur in rohe Bildpunktdaten derart, dass jeder analytische Wert der Datenstruktur als ein Bildpunkt in einer Videorahmenstruktur von Bildpunkten repräsentiert wird, wobei die analytischen Werte Nicht-Bild-Werte sind und wobei die Datenstruktur eine Nicht-Bild-Datenstruktur ist;
Komprimieren der rohen Bildpunktdaten zu einem I-Rahmen als Reaktion auf eine Bestimmung, dass eine Differenz zwischen den rohen Bildpunktdaten eines Videorahmens und rohen Bildpunktdaten eines vorherigen Videorahmens, die mit vorherigen analytischen Werten assoziiert sind, einen spezifizierten Schwellenwert übersteigt;
Komprimieren der rohen Bildpunktdaten zu einem P-Rahmen als Reaktion auf eine Bestimmung, dass die Differenz den spezifizierten Schwellenwert nicht übersteigt;
Speichern des I-Rahmens oder des P-Rahmens in einer Rahmendatei, die mit der Datenstruktur assoziiert ist;
Bereitstellen, aus der Rahmendatei, erster Daten, die mit mindestens einem I-Rahmen assoziiert sind, als Reaktion auf eine Anforderung zum Betrachten von Datenveränderungen, die den spezifizierten Schwellenwert übersteigen; und
Bereitstellen, aus der Rahmendatei, zweiter Daten, die mit mindestens einem P-Rahmen assoziiert sind, als Reaktion auf eine Anforderung zum Betrachten von Datenänderungen, die den spezifizierten Schwellenwert nicht übersteigen.

12. Nicht vergängliches, maschinenlesbares Speichermedium nach Anspruch 11, wobei die bereitgestellten ersten Daten eine besondere Menge von analytischen Werten, die mit dem mindestens einen I-Rahmen assoziiert sind, einschließen.

13. Nicht vergängliches, maschinenlesbares Speichermedium nach Anspruch 11, wobei die bereitgestellten zweiten Daten eine besondere Menge von analytischen Werten, die mit dem mindestens einen P-Rahmen assoziiert sind, einschließen.

14. Nicht vergängliches, maschinenlesbares Speichermedium nach Anspruch 11, wobei die Datenstruktur eine zweidimensionale Tabelle ist.

## Revendications

1. Dispositif de calcul (200), comprenant:
un processeur (202) pour:
convertir des valeurs analytiques d'une structure de données en données brutes de pixel de manière que chaque valeur analytique de la structure de données soit représentée comme un pixel dans une structure de trame de vidéo de pixels, dans laquelle les valeurs analytiques sont des valeurs non-images, et dans laquelle la structure de données est une structure de données non-image;
en réponse à une détermination qu'une différence entre les données brutes de pixel d'une trame de vidéo et des données brutes de pixel d'une trame de vidéo précédente associées à des valeurs analytiques précédentes excède un seuil spécifié, encoder les données brutes de pixel en une I-frame;
en réponse à une détermination que la différence n'excède pas le seuil spécifié, encoder les données brutes de pixel en une P-frame;
fournir des premières données associées à au moins une I-frame en réponse à une requête de visualisation des changements de données excédant le seuil spécifié; et
fournir des secondes données associées à au moins une P-frame en réponse à une requête de visualisation des changements de données n'excédant pas le seuil spécifié.

2. Dispositif de calcul (200) selon la revendication 1, dans lequel le processeur (202) doit en outre stocker la I-frame ou la P-frame dans un fichier de trame associé à la structure de données, dans laquelle les premières données et les secondes données sont fournies depuis le fichier de trame.

3. Dispositif de calcul (200) selon la revendication 1, dans lequel la structure de données est un tableau bidimensionnel.

4. Dispositif de calcul (200) selon la revendication 1, dans lequel les données brutes de pixel sont encodées dans la I-frame et dans lequel le processeur (202) doit en outre:
déterminer une quantité par laquelle la différence excède le seuil spécifié; et
fournir une notification si la quantité excède une limite spécifiée.

5. Dispositif de calcul (200) selon la revendication 1, dans lequel les premières données fournies incluent un ensemble particulier de valeurs analytiques associées à la au moins une I-frame.

6. Dispositif de calcul (200) selon la revendication 1, dans lequel les secondes données fournies incluent un ensemble particulier de valeurs analytiques associées à la au moins une P-frame.

7. Dispositif de calcul (200) selon la revendication 1, dans lequel le processeur (202) doit en outre:
recevoir des valeurs analytiques ultérieures de la structure de données;
convertir les valeurs analytiques ultérieures de la structure de données en données brutes de pixel ultérieures;
encoder les données brutes de pixel ultérieures en une I-frame en réponse à une détermination qu'une différence ultérieure entre les données brutes de pixel ultérieures et les données brutes de pixel excède le seuil spécifié; et
encoder les données brutes de pixel ultérieures en une P-frame en réponse à une détermination que la différence ultérieure n'excède pas le seuil spécifié.

8. Procédé, comprenant:
la réception (302), par un dispositif de calcul, de valeurs analytiques d'une structure de données, dans lesquelles les valeurs analytiques sont des valeurs non-images, et dans lesquelles la structure de données est une structure de données non-image;
la conversion (304), par le dispositif de calcul, des valeurs analytiques en données brutes de pixel de manière que chaque valeur analytique de la structure de données soit représentée comme un pixel dans une structure de trame de vidéo de pixels;
l'encodage (306), par le dispositif de calcul, des données brutes de pixel en une I-frame en réponse à une détermination qu'une différence entre les données brutes de pixel d'une trame de vidéo et des données brutes de pixel d'une trame de vidéo précédente associées à des valeurs analytiques précédentes excède un seuil spécifié;
la récupération (308), par le dispositif de calcul, de premières données associées à au moins une I-frame en réponse à une requête de visualisation des changements de données excédant le seuil spécifié ;
l'encodage, par le dispositif de calcul, des données brutes de pixel en une P-frame en réponse à une détermination que la différence n'excède pas le seuil spécifié; et
la récupération, par le dispositif de calcul, de secondes données associées à au moins une P-frame en réponse à une requête de visualisation des changements de données n'excédant pas le seuil spécifié.

9. Procédé selon la revendication 8, comprenant en outre:
le stockage, par le dispositif de calcul, de l'I-frame dans un fichier de trame associé à la structure de données, dans lequel les premières données sont récupérées depuis le fichier de trame.

10. Procédé selon la revendication 8, comprenant en outre:
la détermination, par le dispositif de calcul, d'une quantité par laquelle la différence excède le seuil spécifié; et
la fourniture, par le dispositif de calcul, d'une notification si la quantité excède une limite spécifiée.

11. Support de stockage lisible par machine non transitoire (204) stockant des instructions (206, 208, 210) qui, lorsqu'exécutées par au moins un processeur (202) d'un dispositif de calcul (200), amènent le dispositif de calcul (200) à:
convertir des valeurs analytiques d'une structure de données en données brutes de pixel de manière que chaque valeur analytique de la structure de données soit représentée comme un pixel dans une structure de trame de vidéo de pixels, dans laquelle les valeurs analytiques sont des valeurs non-images, et dans laquelle la structure de données est une structure de données non-image;
compresser les données brutes de pixel en une I-frame en réponse à une détermination qu'une différence entre les données brutes de pixel d'une trame de vidéo et des données brutes de pixel d'une trame de vidéo précédente associées à des valeurs analytiques précédentes excède un seuil spécifié;
compresser les données brutes de pixel en une P-frame en réponse à une détermination que la différence n'excède pas le seuil spécifié;
stocker la I-frame ou la P-frame dans un fichier de trame associé à la structure de données;
fournir, depuis le fichier de trame, de premières données associées à au moins une I-frame en réponse à une requête de visualisation des changements de données excédant le seuil spécifié; et
fournir, depuis le fichier de trame, de secondes données associées à au moins une P-frame en réponse à une requête de visualisation des changements de données n'excédant pas le seuil spécifié.

12. Support de stockage lisible par machine non transitoire selon la revendication 11, dans lequel les premières données fournies incluent un ensemble particulier de valeurs analytiques associées à la au moins une I-frame.

13. Support de stockage lisible par machine non transitoire selon la revendication 11, dans lequel les secondes données fournies incluent un ensemble particulier de valeurs analytiques associées à la au moins une P-frame.

14. Support de stockage lisible par machine non transitoire selon la revendication 11, dans lequel la structure de données est un tableau bidimensionnel.
